# EUROPÄISCHE PATENTSCHRIFT

(11) **EP 3 359 843 B1**
(45) Veröffentlichungstag und Bekanntmachung des Hinweises auf die Patenterteilung: **18.12.2019**
(21) Anmeldenummer: 16778404.0
(22) Anmeldetag: 10.10.2016
(51) Int. Cl.: F16D 65/097

(54) **SCHEIBENBREMSE FÜR EIN NUTZFAHRZEUG**
DISC BRAKE FOR A COMMERCIAL VEHICLE
FREIN À DISQUE POUR VÉHICULE UTILITAIRE

(30) Priorität: 09.10.2015 DE 102015117285
(43) Veröffentlichungstag der Anmeldung: 15.08.2018
(73) Patentinhaber: KNORR-BREMSE Systeme für Nutzfahrzeuge GmbH, 80809 München (DE)
(72) Erfinder: FRICKE, Jens, 94474 Vilshofen (DE); KOCH, Werner, 73326 Deggingen (DE); THEIL, Robert, 82299 Türkenfeld (DE); PETSCHKE, Andreas, 94127 Neuburg am Inn (DE); PAHLE, Wolfgang, 83707 Bad Wiessee (DE); SCHÖFBERGER, Tobias, 84048 Mainburg (DE); WERTH, Alexander, 80999 München (DE); ADELUNG, Matthias, 94081 Fürstenzell (DE); GERHARDINGER, Markus, 94550 Künzing (DE); DAHLENBURG, Julian, 91166 Georgensgmünd (DE)
(86) Internationale Anmeldenummer: PCT/EP2016/074154
(87) Internationale Veröffentlichungsnummer: WO 2017/060512

(56) Entgegenhaltungen:
- DE-A1-102008 019 265
- DE-A1-102013 013 687
- DE-A1-102013 101 781
- US-B2- 9 097 304

## Beschreibung

Die Erfindung betrifft eine Scheibenbremse für ein Nutzfahrzeug nach dem Oberbegriff des Anspruchs 1.

Zur Positionssicherung der Bremsbeläge einer solchen, aus dem Stand der Technik bekannten Scheibenbremse sind die Bremsbeläge jeweils mit einer Belaghaltefeder versehen, die im oberen, einer Einschuböffnung des Belagschachtes des Bremsträgers zugewandten Randbereich an den Bremsbelägen befestigt sind.

Beispielhaft sei hierzu auf die DE 94 22 342 U1 sowie die DE 40 20 487 A1 verwiesen, in denen jeweils eine Scheibenbremse offenbart ist, die sich insbesondere auch unter den vielfach rauen Betriebsbedingungen, denen Scheibenbremsen in Nutzfahrzeugen ausgesetzt sind, bewährt hat.

Von einem sich quer zu den Belaghaltefedern, also in Achsrichtung der Bremsscheibe erstreckenden Belaghaltebügel, der sich an den Belaghaltefedern abstützt, werden die Bremsbeläge unter Vorspannung in den jeweiligen Belagschacht des ortsfesten Bremsträgers gedrückt. Dabei ist der Belaghaltebügel in zwei sich gegenüberliegenden, eine Montageöffnung des Bremssattels begrenzenden Bereichen des Bremssattels festgelegt.

Die Lagerung der Bremsbeläge unter Federspannung dient sowohl einem Toleranzausgleich als auch einer Reduzierung bzw. einer Verhinderung der Entstehung von Klappergeräuschen, wie sie ansonsten im Fahrbetrieb des Fahrzeugs auftreten würden.

Um den Belaghaltebügel mit einfachen Mitteln an- und abzubauen, ist er einerseits in eine taschenförmige Aufnahme des Bremssattels eingesteckt und andererseits mittels eines Sicherungsbolzens, einer Scheibe und eines Splintes am Bremssattel befestigt, wobei sich der am Belaghaltebügel abstützende Sicherungsbolzen durch ein am Bremssattel angeformtes Befestigungsauge geführt ist, das eine Fensteröffnung des Belaghaltebügels durchtritt.

Die Vielzahl der notwendigen Einzelteile, mit denen der Belaghaltebügel am Bremssattel befestigt wird, ist nur mit einem relativ großen Fertigungs- und Montageaufwand möglich, was zu entsprechend hohen Kosten führt und der steten Forderung nach einer Kostenoptimierung entgegensteht.

Dies trifft gleichermaßen auf eine andere bekannte Art der Befestigung des Belaghaltebügels zu, bei der dieser mit dem Bremssattel verschraubt ist. Hierzu muss eine Gewindebohrung in den Bremssattel eingebracht werde, was naturgemäß relativ aufwändig zu bewerkstelligen ist.

Darüber hinaus besteht prinzipiell die Gefahr, dass sich das Befestigungselement, konkret der Splint, löst und insbesondere im Fahrbetrieb verlorengeht, ebenso wie der dann nicht mehr gesicherte Sicherungsbolzen, sodass der Belaghaltebügel seiner Funktion nicht mehr nachkommen kann, mit der Folge eines Versagens der Scheibenbremse.

Als weiterer Nachteil dieser bekannten Scheibenbremse ist das Anformen der taschenförmigen Aufnahme sowie des Befestigungsauges zu sehen, die einstückig bei dem aus Gusseisen hergestellten Bremssattel ausgebildet sind. Aufgrund von fertigungsbedingten Toleranzen, die dazu führen können, dass der Belaghaltebügel nicht mit der gewünschten Präzision am Bremssattel gehalten wird, kann es trotz der Belaghaltefedern zu einer ungefederten Radialbewegung der Bremsbeläge kommen, sodass der Zweck der Bremsbelaghalterung, nämlich Klappergeräusche mit Sicherheit zu vermeiden, nicht erfüllt werden kann, zumindest nicht garantiert.

Es wurde daher schon vielfach vorgeschlagen, im Bereich der Belagschächte, insbesondere an deren Grund, Federelemente vorzusehen, auf denen sich die Bremsbeläge abstützen. In der WO 2006/048267 A1 ist vorgesehen zum Ausgleich von Toleranzen zwischen einer Belagträgerplatte und dem Belagschacht Federelemente in Form von Blatt- oder Schenkelfedern anzuordnen.

In der DE 10 2006 036 277 A1 ist eine Scheibenbremse beschrieben, bei der Federelemente am Grund des jeweiligen Belagschachtes vorgesehen sein können, auf denen der Bremsbelag aufliegt, sodass dieser in Nichtgebrauchsstellung in radialer Richtung schwebend gehalten ist.

In der US 9 097 304 B2 ist eine gattungsgemäße Scheibenbremse offenbart, die jeweils wenigstens ein formstabiles Sperrelement als Widerlager entgegen der Einschubrichtung des Bremsbelages aufweist, wobei sich das Sperrelement am Bremsbelag und am Bremsträger abstützt.

Der Erfindung liegt die Aufgabe zugrunde, eine Scheibenbremse der gattungsgemäßen Art so weiterzuentwickeln, dass ihre Betriebssicherheit verbessert und ihre Herstellungs- und Montagekosten gesenkt werden.

Diese Aufgabe wird durch eine Scheibenbremse mit den Merkmalen des Anspruchs 1 gelöst.

Durch die erfindungsgemäße Ausgestaltung der Scheibenbremse kann auf den Einsatz von Belaghaltefedern und in Korrespondenz damit einen Belaghaltebügel verzichtet werden. Hierdurch ist zunächst einmal die Herstellung des Bremssattels deutlich vereinfacht, da keine Haltemittel, wie die zum Stand der Technik erwähnte, den Belaghaltebügel aufnehmende Tasche und das zur Befestigung eines Sicherungselementes dienende Auge nun nicht angeformt werden müssen.

Abgesehen davon, dass sich dadurch naturgemäß eine Kostenersparnis ergibt, ebenso wie im Übrigen durch den Verzicht des Belaghaltebügels insgesamt, treten nun aufgrund der nun nicht mehr zu berücksichtigenden Toleranzschwankungen keine sich daraus ergebenden Fehlstellungen der Bremsbeläge auf.

Die zum Stand der Technik beschriebenen Nachteile bei einem Lösen der Sicherung des Belaghaltebügels am Bremssattel und die sich daraus ergebenden Gefahren hinsichtlich einer Einschränkung der Betriebssicherheit, sind nun nicht mehr gegeben, was vor allem deshalb bedeutsam ist, als Scheibenbremsen sicherheitsrelevante Funktionsteile darstellen.

Zur einfacheren Montage kann das Sperrelement gelenkig an der Belagträgerplatte des Bremsbelages angeschlossen sein, bevorzugt in einem Bereich, der einem Bremsträgerhorn benachbart ist, während das andere Ende in eine Aussparung oder einen Hinterschnitt oder den besagten Schlitz des gegenüberliegenden Bremsträgerhorns eingreift, der quer zur Einschubrichtung des Bremsbelages verläuft.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Scheibenbremse nach dem Stand der Technik in einer perspektivischen Draufsicht
- Figur 2: einen Teil der Scheibenbremse nach Figur 1, gleichfalls in einer perspektivischen Ansicht
- Figur 3: eine Seitenansicht der Einzelheit nach Figur 2
- Figur 4: eine Einzelheit einer erfindungsgemäßen Scheibenbremse in einer schematischen Seitenansicht.

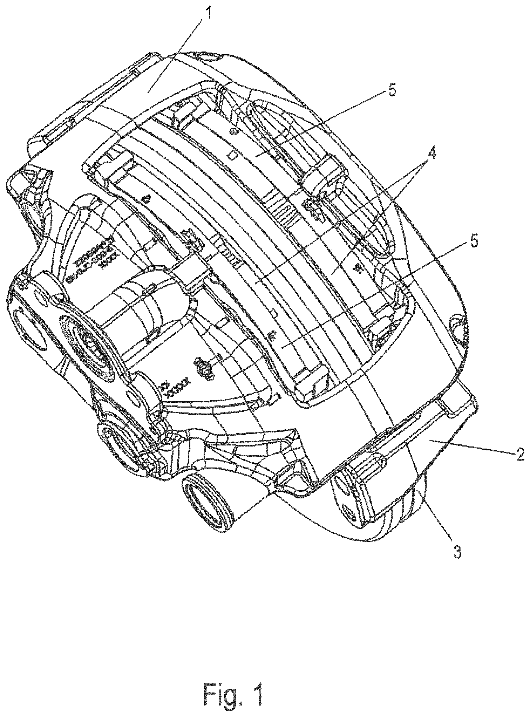

In der **Figur 1** ist eine Scheibenbremse nach dem Stand der Technik abgebildet, mit einem Bremssattel 1, der eine fahrzeugseitige Bremsscheibe 3 übergreift und der an einem ortsfesten Bremsträger 2 befestigt ist.

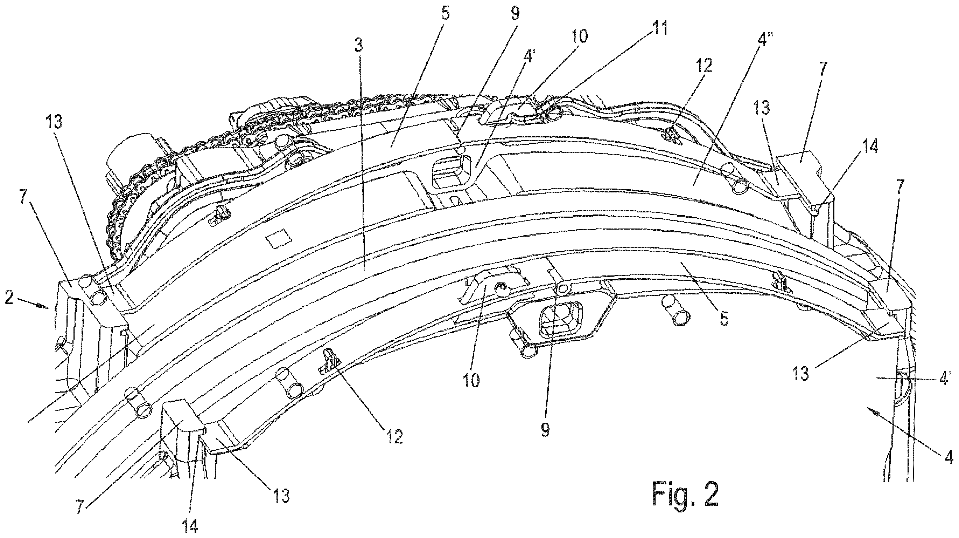

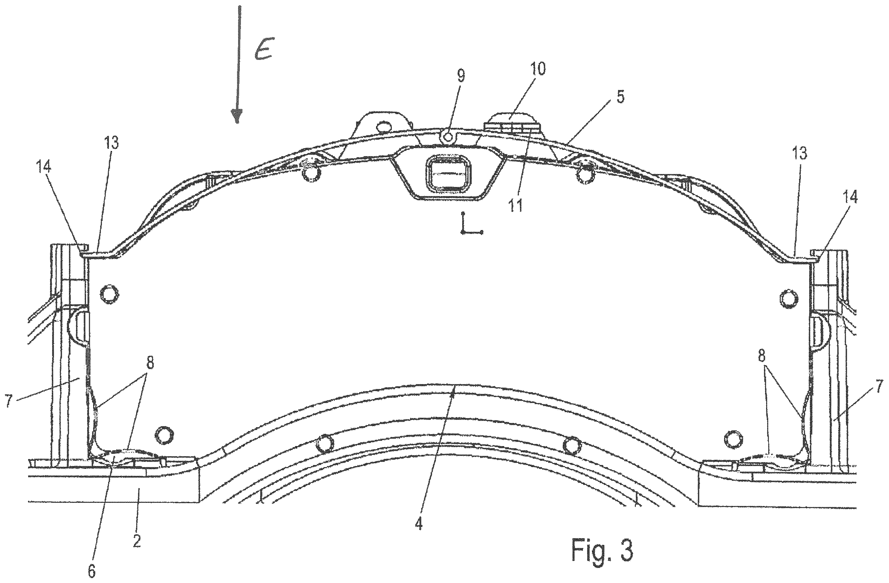

Beidseitig der Bremsscheibe 3 ist jeweils ein eine Belagträgerplatte 4' und einen daran befestigten Reibbelag 4" aufweisender Bremsbelag 4 vorgesehen, der in der **Figur 3** in einer Seitenansicht erkennbar ist, während die **Figur 2** die Scheibenbremse ohne Bremssattel wiedergibt.

Jeder Bremsbelag 4 ist in einem Belagschacht 6 des Bremsträgers 2 angeordnet, der in Umfangsrichtung der Bremsscheibe 3 bzw. in Längsrichtung des einliegenden Bremsbelages 4 durch Bremsträgerhörner 7 begrenzt ist. Der Bremsträger ist hier rahmenartig ausgebildet und umgreift vorzugsweise rahmenartig einen oberen Randbereich der Bremsscheibe 3. Er kann aber auch einseitig der Bremsscheibe 3 vorgesehen sein. Dann ist der andere Bremsbelag im Bremssattel gehalten (hier nicht dargestellt).

In den sich gegenüberliegenden Ecken des Belagschachtes 6 sind Federelemente 8 angeordnet, die im Beispiel nach der Figur 3 als winklige Blattfedern ausgebildet sind, wobei ein Schenkel am Grund des Belagschachtes 6 und der andere Schenkel am zugeordneten Bremsträgerhorn 7 anliegt und sich der Bremsbelag 4 an beiden Schenkeln abstützt.

In einem alternativen, in Fig. 1 nicht dargestellten Ausführungsbeispiel, sind die Federelemente 8 an dem Bremsbelag 4 angeordnet und an diesem fixiert. In beiden Varianten schaffen die Federelemente 8 einen Toleranzausgleich und verhindern ein korrosionsbedingtes Blockieren der Bremsbeläge 4 im Belagschacht 6.

Gemäß dem in Fig. 1 gezeigten Beispiel sind auf den den Federelementen 8 gegenüberliegenden Seiten formstabile Sperrelemente 5 als Widerlager angeordnet, die sich an den Belagträgerplatten 4' der Bremsbeläge 4 abstützen und am Bremsträger 2 gehalten sind. Die formstabilen Sperrelemente 5 sind entgegen einer im Wesentlichen radialen Einschubrichtung E der Bremsbeläge 4 vorgesehen (siehe hierzu Fig. 3).

In dem in den Figuren 1-3 gezeigten Beispiel sind die Sperrelemente 5 als zweiteilige Bügel ausgebildet, die etwa im Mittenbereich durch ein Scharnier 9 gelenkig miteinander verbunden sind und endseitig Schenkelabschnitte 13 aufweisen, die in, bezogen auf die Bremsscheibe 3 axial ausgerichtete bzw. in Zuspannrichtung sich erstreckende Schlitze 14 der Bremsträgerhörner 7 eingreifen, sodass sich ein Formschluss ergibt.

Mithilfe des Scharniers 9 ist ein leichtes Einführen der Schenkelabschnitte 13 in die Schlitze 14 möglich, da das Sperrelement 5 hierzu entsprechend in seiner Form geändert werden kann. Nach einer Montage und Streckung des Sperrelementes 5 bis in die Schlitze 14 erfolgt eine Blockierung des Scharnieres 9, im Beispiel dadurch, dass ein an den Bremsbelag 4 angeschlossenes Auge 10 einen Schlitz des Sperrelementes 5 durchtritt und anschließend durch die Öffnung des Auges 10 ein Splint 11 geführt wird, der durch Verbiegen so gesichert wird, dass ein Herausgleiten aus dem Auge 10 ausgeschlossen ist.

Des Weiteren sind an den Bremsbelägen 4 Widerhaken 12 angeformt, die gleichfalls das bügelartige Sperrelement 5 durchtreten und so eine zusätzliche Sicherung bilden.

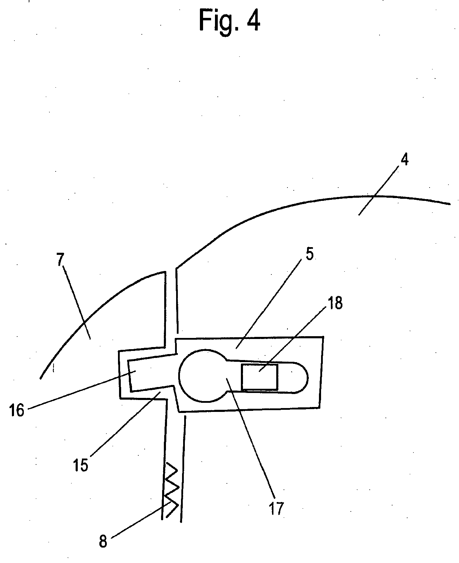

Das Sperrelement 5 gemäß der Erfindung ist bei dem in der **Figur 4** gezeigten Beispiel als Riegelzapfen 16 ausgebildet, der in den Ausschnitt 15 des Bremsträgerhorns 7 in Funktion eingreift. Dabei ist der Riegelzapfen 16 mit einer Kulisse 17 versehen, in der ein Kulissenstein 18 geführt ist, der mit dem Bremsbelag 4 verbunden ist, wobei der Riegelzapfen 16 quer zur Einschubrichtung E des Bremsbelages 4 verschiebbar ist. In einer anderen Ausführungsvariante ist der Kulissenstein 18 drehbar am Bremsbelag 4 angeschlossen und zwar an der dem Reibbelag 4" abgewandten Rückseite der Belagträgerplatte 4'.

In einem weiteren, nicht gezeigten, Ausführungsbeispiel ist der Riegelzapfen 16 derart ausgebildet, dass er in einen am Bremsträgerhorn 7 angeordneten Kulissenstein 18 eingreift. So kann allgemeiner formuliert die radiale Abstützung sowohl mit einem vom Bremsbelag 4 bzw. der Belagträgerplatte 4' wirkenden Sperrelement 5 als auch mit einem vom Bremsträgerhorn 7 wirkenden Sperrelement 5 erzielt werden.

Vorteilhaft weist die dem Bremsträgerhorn 7 zugewandte Seite des Bremsbelages in einem Teilbereich einen Vorsprung auf, der zumindest geringfügig größer als die Dicke des Federelements 8 ist, wobei das Federelement 8 in dem Bereich außerhalb des Vorsprungs zwischen dem Bremsträgerhorn 7 und dem Bremsbelag 4 angeordnet ist.

In dem in Fig. 4 dargestellten Ausführungsbeispiel ist in der Darstellung der Bereich oberhalb des Riegelzapfens 16 im Vergleich zu dem Bereich unterhalb des Riegelzapfens 16 vorgesetzt und das Federelement 8 in dem dann also zurückgesetzten Bereich unterhalb des Riegelzapfens 16 angeordnet. Von Vorteil ist an dieser Ausgestaltung der Bremsbeläge 4, dass der Bremsbelag 4 am Bremsträgerhorn 7 zur Anlage kommt bevor das Federelement 8 auf Block gedrückt wird. Somit wird das Federelement 8 dauerhaft geschützt.

### Bezugszeichenliste

- 1: Bremssattel
- 2: Bremsträger
- 3: Bremsscheibe
- 4: Bremsbelag
- 4': Belagträgerplatte
- 4": Reibbelag
- 5: Sperrelement
- 6: Belagschacht
- 7: Bremsträgerhorn
- 8: Federelement
- 9: Scharnier
- 10: Auge
- 11: Splint
- 12: Widerhaken
- 13: Schenkelabschnitt
- 14: Schlitz
- 15: Ausschnitt
- 16: Riegelzapfen
- 17: Kulisse
- 18: Kulissenstein

## Patentansprüche

1. Scheibenbremse für ein Nutzfahrzeug, mit
- einem eine fahrzeugseitige Bremsscheibe (3) übergreifenden Bremssattel (1), der an einem ortsfesten Bremsträger (2) gehalten ist,
- wobei der Bremsträger (2) mindestens einen, insbesondere zwei, jeweils durch seitliche Bremsträgerhörner (7) begrenzte Belagschacht/Belagschächte (6) aufweist,
- in dem oder denen jeweils ein Bremsbelag (4) angeordnet ist, der oder die jeweils in eine Einschubrichtung (E) in den Belagschacht oder die Belagschächte (6) einschiebbar ist/sind,
- wobei jeweils wenigstens ein formstabiles Sperrelement (5) als Widerlager entgegen der Einschubrichtung (E) des Bremsbelags oder der Bremsbeläge (4) vorgesehen ist,
- das oder die sich an dem oder den Bremsbelägen (4) oder dem Bremsträger (2) abstützen und am Bremsträger (2) oder an dem oder den Bremsbelägen (4) gehalten sind,
**dadurch gekennzeichnet, dass**
das Sperrelement (5) als Riegelzapfen (16) ausgebildet ist, mit einer Kulissenführung (17), in der ein Kulissenstein (18) geführt ist, wobei der Riegelzapfen (16) an einer Belagträgerplatte des Bremsbelages (4) gehalten ist und in eine Ausnehmung (15) des Bremsträgerhorns (7) eingreift und wobei der Riegelzapfen (16) verschieb- und/oder drehbar gelagert ist.

2. Scheibenbremse nach Anspruch 1,
**dadurch gekennzeichnet, dass**
jedem Bremsbelag (4) mindestens ein Sperrelement (5) zugeordnet ist.

3. Scheibenbremse nach einem der vorhergehenden Ansprüche,
**dadurch gekennzeichnet, dass**
zwischen dem jeweiligen Bremsbelag (4) und der Belagschachtbegrenzung mindestens ein Distanzelement angeordnet ist, insbesondere in Form eines Federelementes (8), eines Gleitbleches, eines Bolzens oder dergleichen.

4. Scheibenbremse nach einem der vorhergehenden Ansprüche, wobei einer der Bremsbeläge im Belagschacht (6) des Bremsträgers (2) angeordnet ist und ein zweiter Bremsbelag (4) im Bremssattel (1) auf der dem Bremsträger (2) gegenüberliegenden Seite der Bremsscheibe (3) gehalten ist,
**dadurch gekennzeichnet, dass**
der im Bremssattel (1) gehaltene Bremsbelag (4) gleichfalls wenigstens ein form-stabiles Sperrelement (5) aufweist.

## Claims

1. Disc brake for a commercial vehicle, with
- a brake calliper (1) overlapping an onboard brake disc (3), said calliper being retained on a stationary brake carrier (2),
- wherein the brake carrier (2) has at least one brake pad slot, in particular two brake pad slots, (6) each delimited by lateral brake carrier lugs (7) on each side,
- in which or in each of which a brake pad (4) is arranged which can be inserted in an insert direction (E) into the brake pad slot(s) (6),
- wherein, in each case, at least one dimensionally stable locking element (5) is provided as an abutment against the insert direction (E) of the brake pad or brake pads (4),
- said locking element(s) being supported on the brake pad or brake pads (4) or on the brake carrier (2) and being retained on the brake carrier (2) or on the brake pad or brake pads (4),
**characterised in that**
the locking element (5) is formed as a locking pin (16), with a slotted guide (17) in which a sliding block (18) is guided, wherein the locking pin (16) is retained on a pad carrier plate of the brake pad (4) and engages in a recess (15) of the brake carrier lug (7) and wherein the locking pin (16) is mounted so that it can be moved and/or can be rotated.

2. Disc brake according to claim 1,
**characterised in that**
at least one locking element (5) is assigned to each brake pad (4).

3. Disc brake according to any one of the preceding claims,
**characterised in that**
at least one distance piece is arranged between the respective brake pad (4) and the brake slot boundary, in particular in the form of a spring element (8), a sliding plate, a bolt or similar.

4. Disc brake according to any one of the preceding claims, wherein one of the brake pads is arranged in the brake pad slot (6) of the brake carrier (2) and a second brake pad (4) is retained in the brake calliper (1) on the side of the brake disc (3) opposite the brake carrier (2),
**characterised in that**
the brake pad (4) retained in the brake calliper (1) also has at least one dimensionally stable locking element (5).

## Revendications

1. Frein à disque d'un véhicule utilitaire, comprenant
- un étrier (1) de frein, qui chevauche un disque (3) de frein du côté du véhicule et qui est retenu à un flasque (2) de frein fixe en position,
- dans lequel le flasque (2) de frein a au moins un puits (6) de garniture, notamment deux puits (6) de garniture, délimités chacun par des cornes (7) latérales du flasque de frein,
- dans lequel ou dans lesquels est disposé, respectivement, une garniture (4) de frein, qui peut/peuvent pénétrer, respectivement, dans un sens (E) de pénétration dans le puits de garniture ou dans les puits (6) de garniture,
- dans lequel il est prévu, respectivement, au moins un élément (5) d'arrêt de forme stable, comme butée, dans le sens contraire au sens (E) de pénétration de la garniture de frein ou des garnitures (4) de frein,
- qui s'appuient sur la ou les garnitures (4) de frein ou le flasque (2) de frein et qui sont retenus au flasque (2) de frein ou à la garniture ou aux garnitures (4) de frein,
**caractérisé en ce que**
l'élément (5) d'arrêt est constitué en tenon (16) de verrouillage ayant un guidage (17) à coulisse, dans lequel un coulisseau (18) est guidé, le tenon (16) de verrouillage étant retenu sur une plaque de porte-garniture de la garniture (4) de frein et pénétrant dans un évidement (15) de la corne (7) du flasque de frein et dans lequel le tenon (16) de verrouillage est monté coulissant et/ou tournant.

2. Frein à disque suivant la revendication 1,
**caractérisé en ce qu'**
au moins un élément (5) d'arrêt est associé à chaque garniture (4) de frein.

3. Frein à disque suivant l'une des revendications précédentes,
**caractérisé en ce qu'**
au moins un élément de mise à distance, notamment sous la forme d'un élément (8) de ressort d'une tôle de glissement, d'un axe ou analogue, est disposé entre la garniture (4) de frein respective et la délimitation du puits de garniture.

4. Frein à disque suivant l'une des revendications précédentes, dans lequel l'une des garnitures de frein est disposée dans le puits (6) de garniture du flasque (2) de frein et une deuxième garniture (4) de frein est retenue dans l'étrier (1) de frein du côté du disque (3) de frein opposé au flasque (2) de frein,
**caractérisé en ce que**
la garniture (4) de frein retenue dans l'étrier (1) de frein a également au moins un élément (5) d'arrêt de forme stable.
